# EUROPEAN PATENT APPLICATION

(11) **EP 4 495 645 A2**
(43) Date of publication of application: **22.01.2025**
(21) Application number: 24162592.0
(22) Date of filing: 11.03.2024
(51) Int. Cl.: G02B 6/27, G02B 6/42

(54) **OPTICAL ELECTRONIC DEVICE AND MANUFACTURING METHOD THEREOF**

(30) Priority: 10.03.2023 US 202318120069
(71) Applicant: II-VI Delaware, Inc., Wilmington, DE 19890 (US)
(72) Inventor: CLARICI, Georg, Wilmington, 19801 (US); DOMBURG, Patrick, Wilmington, 19801 (US); LANGE, Enrico, Wilmington, 19801 (US); VARÓN, Andrés, Wilmington, 19801 (US)
(74) Representative: Schmidt, Christian

(57) **Abstract**

Optical components and optical electronic devices, and methods for making optical components and optical electronic devices. As non-limiting examples, various aspects of this disclosure provide various optical component and optical electronic devices, and methods for making thereof, that comprise three-dimensional structured glass configurations. An optical component comprises an optical element receiving output light from the top side of a component. An optical electronic device comprises an opto-electronic chip and optical component mounted on a substrate. An optical component comprises a unitary piece of material comprising a second three-dimensional structures performing a different optical function to and receiving a first output light from a first three-dimensional structure.

## Description

### BACKGROUND

Present optical electronic devices and methods for manufacturing optical electronic devices are inadequate, for example resulting in excess cost or device sizes that are too large. As a non-limiting example, present optical electronic devices utilize free-space optical configurations that increase optical electronic device size, cost, and manufacturing complexity. Further limitations and disadvantages of conventional and traditional approaches will become apparent to one of skill in the art, through comparison of such approaches with the present disclosure as set forth in the remainder of the present application with reference to the drawings.

### BRIEF DESCRIPTION OF SEVERAL VIEWS OF THE DRAWINGS

Figure 1 shows an example optical electronic device and an example of making an example optical electronic device, in accordance with various aspects of the present disclosure.
Figure 2 shows a cross-sectional view illustrating an example optical component and an example method of making an example optical component, in accordance with various aspects of the present disclosure.
Figure 3 shows a cross-sectional view illustrating an example optical component and an example method of making an example optical component, in accordance with various aspects of the present disclosure.
Figure 4 shows a top view illustrating an example optical component and an example method of making an example optical component, in accordance with various aspects of the present disclosure.
Figure 5 shows a cross-sectional view illustrating an example optical component and an example method of making an example optical component, in accordance with various aspects of the present disclosure.
Figure 6 shows a top view illustrating an example optical component and an example method of making an example optical component, in accordance with various aspects of the present disclosure.
Figure 7 shows a cross-sectional view illustrating an example optical component and an example method of making an example optical component, in accordance with various aspects of the present disclosure.
Figure 8 shows a top view illustrating an example optical component and an example method of making an example optical component, in accordance with various aspects of the present disclosure.
Figure 9 shows a top view illustrating an example optical component and an example method of making an example optical component, in accordance with various aspects of the present disclosure.
Figure 10 shows cross-sectional views illustrating an example optical component and an example method of making an example optical component, in accordance with various aspects of the present disclosure.
Figure 11 shows an example method of making an optical electronic device, in accordance with various aspects of the present disclosure.

### SUMMARY

Various aspects of this disclosure provide optical components and optical electronic devices, and methods for making optical components and optical electronic devices. As non-limiting examples, various aspects of this disclosure provide various optical component and optical electronic devices, and methods for making thereof, that comprise three-dimensional structured glass configurations.

### DETAILED DESCRIPTION OF VARIOUS ASPECTS OF THE DISCLOSURE

The following discussion presents various aspects of the present disclosure by providing examples thereof. Such examples are non-limiting, and thus the scope of various aspects of the present disclosure should not necessarily be limited by any particular characteristics of the provided examples. In the following discussion, the phrases "for example," "e.g.," and "exemplary" are non-limiting and are generally synonymous with "by way of example and not limitation," "for example and not limitation," and the like.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." Also, as utilized herein, "or" may be utilized interchangeably with "and/or."

The terminology used herein is for the purpose of describing particular examples only and is not intended to be limiting of the disclosure. As used herein, the singular forms are intended to include the plural forms as well, unless the context clearly indicates otherwise. It will be further understood that the terms "comprises," "includes," "comprising," "including," "has," "have," "having," and the like when used in this specification, specify the presence of stated features, integers, steps, operations, elements, and/or components, but do not preclude the presence or addition of one or more other features, integers, steps, operations, elements, components, and/or groups thereof.

It will be understood that, although the terms first, second, etc. may be used herein to describe various elements, these elements should not be limited by these terms. These terms are only used to distinguish one element from another element. Thus, for example, a first element, a first component or a first section discussed below could be termed a second element, a second component or a second section without departing from the teachings of the present disclosure. Similarly, various spatial terms, such as "upper," "lower," "side," and the like, may be used in distinguishing one element from another element in a relative manner. It should be understood, however, that components may be oriented in different manners, for example a semiconductor device or package may be turned sideways so that its "top" surface is facing horizontally and its "side" surface is facing vertically, without departing from the teachings of the present disclosure.

In the drawings, the thickness or size of layers, regions, and/or components may be exaggerated for clarity. Accordingly, the scope of this disclosure should not be limited by such thickness or size. Additionally, in the drawings, like reference numerals may refer to like elements throughout the discussion. Elements numbered with an apostrophe (') can be similar to correspondingly numbered elements without an apostrophe.

It will also be understood that when an element A is referred to as being "connected to" or "coupled to" an element B, the element A can be directly connected to the element B or indirectly connected to the element B (*e.g.,* an intervening element C (and/or other elements) may be present between the element A and the element B).

Various aspects of this disclosure provide optical components and optical electronic devices, and methods for making optical components and optical electronic devices, which can decrease the size, decrease the cost, increase the reliability, and/or improve the manufacturability of the optical components and optical electronic devices.

The above and other aspects of the present disclosure will be described in or be apparent from the following description of various example implementations. Various aspects of the present disclosure will now be presented with reference to accompanying drawings, such that those skilled in the art may readily practice the various aspects.

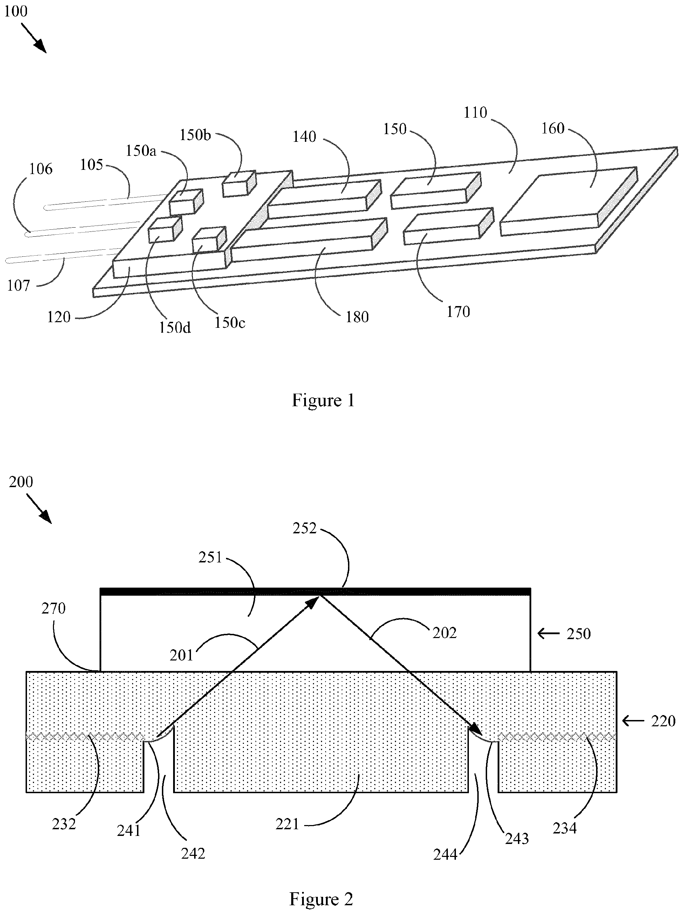

Figure 1 shows an example optical electronic device and an example of making an example optical electronic device, in accordance with various aspects of the present disclosure. The example optical electronic device 100 may, for example, comprise a multi-chip or multi-component module. The example optical electronic device 100 may, for example, comprise a coherent transmitter/receiver.

The example optical electronic device 100 may, for example, comprise a substrate 110. The substrate 110 may, for example, comprise a ceramic plate. The substrate 110 may also, for example, comprise a glass plate, a metal plate, an organic material plate, an epoxy resin plate, etc. The substrate 110 may, for example, comprise conductive elements, for example, traces, pads, thermally and/or electrically conductive vias, etc. The substrate 110 may alternatively, for example, be free of conductive elements. The substrate 110 may also, for example, be referred to herein as a carrier.

The example optical electronic device 100 may, for example, comprise an interface to receive optical fibers, for example for optical input signals, optical output signals, laser inputs, etc. The example optical electronic device 100 is illustrated coupled to an optical signal input fiber 105 at an optical receive interface, a laser input fiber 106 at a laser interface, and an optical output signal fiber 107 at an optical transmit interface.

The example optical electronic device 100 may, for example, comprise a glass component 120. The glass component 120 may also be referred to herein as a glass chip, a glass block, a glass, a glass part, a lower glass component, a glass, etc.

The glass component 120 may, for example, be coupled to a top side of the substrate 110. The glass component 120 may be coupled to the top side of the substrate 110 in any of a variety of manners. For example, the glass component 120 may be epoxied to the top side of the substrate 110, glass-to-glass welded to the top side of the substrate 110 (e.g., a glass substrate 110), held to the top side of the substrate 110 by optical contacting (e.g., direct glass-to-glass contacting with no intervening epoxy or glass-to-glass welding), etc.

The glass component 120 and other glass components are discussed herein as being made of glass, but a glass alternative may also be utilized. For example, the glass component 120 may comprise and/or be made of any of a variety of materials, for example silicon, InP, etc. Also for example, the glass component 120 may comprise and/or be made of any material that is transparent (or transparent enough) at the operating wavelength and which can be 3D structured. The glass component 120 may, for example, comprise only a single unitary piece of glass or other material (e.g., as opposed to a plurality of pieces of glass coupled together). The glass component 120 may also, for example, comprise a plurality of pieces of glass, for example stacked layers of glass. The glass component 120 may also, for example, comprise one or more reflective coatings, rotating coatings, and/or other coatings or materials discussed herein.

The glass component 120 may, for example, comprise features configured to receive, hold, and/or align optical fibers. Such features may, for example, comprise grooves, v-grooves, apertures, receptacles, etc. The example optical electronic device 100 is illustrated with the optical signal input fiber 105, laser input fiber 106, and optical signal output fiber 107 coupled to the glass component 120. Additionally, in an example implementation, the glass component 120 may be attached to one or more fiber receptacle structures external to the glass component 120.

The glass component 120 may perform any of a variety of optical functions, for example, the routing of light between optical electronic chips, the routing of light between optical electronic chips and fibers, the routing of light to and/or from optical elements 150, etc. The glass component 120 may also, for example, perform collimating, spot size converting (e.g., spot size increasing, spot size reducing, etc.), etc. As will be discussed in more detail herein, the glass component 120 may comprise one or more three-dimensional structures formed therein.

The example optical electronic device 100 may, for example, comprise a plurality of optical elements 150a, 150b, 150c, and 150d. The optical elements 150a, 150b, 150c, and 150d may, for example, be coupled to a top side of the glass component 120. As will be presented in more detail herein, the optical elements 150a, 150b, 150c, and 150d may be coupled to the top side of the glass component 120 with epoxy, with glass welding, by optical contacting (e.g., direct glass-to-glass contacting with no intervening epoxy or glass welding), etc.

The optical elements 150a, 150b, 150c, and 150d are discussed herein as comprising glass, but a glass alternative may also be utilized. The optical elements 150a, 150b, 150c, and 150d may, for example, comprise reflective material, polarization-specific reflective material, rotatory materials (e.g., dextrorotatory and/or levorotatory materials, etc.), thin film coatings, voltage-controllable attenuation materials, etc. The optical elements 150a, 150b, 150c, and 150d may, for example, comprise any number of layers of glass and/or reflective materials and/or other materials.

The optical elements 150a, 150b, 150c, and 150d may perform one or more of any of a variety of optical functions. Such functions may, for example, comprise polarizing beam splitting or combining, beam rotating, etc. Such functions may also, for example, comprise wavelength filtering, for example utilizing thin film filters. Such functions may additionally, for example, comprise isolating, for example comprising a structure that allows light to be transmitting in one direction while blocking the light in another direction. Such functions may further, for example, comprise performing variable optical attenuation, for example where the light that passes through the optical element is attenuated or passed in relation to a voltage applied across the optical element. Such functions may still further comprise performing any of a variety of functions based on light reflecting. Such functions may also comprise performing any of a variety of functions based on light refracting.

The glass component 120 is illustrated receiving a laser input from the laser input fiber 106. The glass component 120, for example working in conjunction with one or more optical elements like the optical elements 150a, 150b, 150c, and 150d, split the laser input into a first laser signal and a second laser signal. The glass component 120 may then, for example, route the first laser signal to the opto-electronic receiver chip 140 and route the second laser signal to the opto-electronic transmitter chip 180.

In a particular example paradigm, the glass component 120 may be viewed as an optical printed circuit board to which the optical elements 150a, 150b, 150c, and 150d are mounted.

The example optical electronic device 100 may, for example, comprise one or more opto-electronic chips. Such chips may, for example, convert between electrical signals and optical signals.

For example, the example optical electronic device 100 is illustrated comprising an opto-electronic receiver chip 140, which may also be referred to herein as an opto-electronic demodulator chip. The opto-electronic receiver chip 140 may, for example, receive one or more optical signals from the glass component 120, and convert the received one or more optical signals into one or more electrical signals.

In an example implementation, the glass component 120 receives an optical signal from the optical signal input fiber 105. The glass component 120 working in conjunction with a first optical element 150a, which splits two polarizations of the received optical signal, and a second optical element 150b, which rotates one of such split polarizations, provides two optical signals to the opto-electronic receiver chip 140. The opto-electronic receiver chip 140 receives the two optical signals from the glass component 120, and demodulates the two received optical signals utilizing two respective sets of demodulator (or receiver) circuits, one respective set of demodulator circuits corresponding to each of the two optical signals received from the glass component 120.

Also for example, the example optical electronic device 100 is illustrated comprising an opto-electronic transmitter chip 180, which may also be referred to herein as an opto-electronic modulator chip. The opto-electronic transmitter chip 180 may, for example, receive one or more electronic signals, convert the received one or more electrical signals into one or more optical signals, and output the optical signals to the glass component 120.

In an example implementation, the opto-electronic transmitter chip 180 may comprise two sets of modulator (or transmitter) circuits, one corresponding to each of two light polarizations. The opto-electronic transmitter chip 180 may output two optical signals to the glass component 120. The glass component 120 may then, for example, receive the two optical signals from the opto-electronic transmitter chip 180. The glass component 120 may then work in conjunction with the third optical element 150c, which rotates (or polarizes) one of the two received optical signals, and with the fourth optical element 150d, which combines the rotated optical signal with the other of the two received optical signals into a single optical signal comprising two polarizations. The glass component 120 may then route the combined optical signal to the optical signal output fiber 107.

The opto-electronic chips 140 and 180 may, for example, comprise bare semiconductor dies mounted to the substrate 110. For example, the opto-electronic chips 140 and 180 may be adhered to the substrate 110 with an epoxy, a die-attach film, etc. Also for example, the opto-electronic chips 140 and 180 may be coupled to the substrate 110 with solder, direct metal-to-metal solderless bonding, etc.

The opto-electronic chips 140 and 180 may, for example, be electrically bonded to the substrate 110 and/or other components utilizing wire-bonding, flip-chip bonding, etc.

The opto-electronic chips 140 and 180 may, for example, comprise indium phosphide (InP) semiconductor chips. Note that other semiconductor materials (e.g., silicon, gallium arsenide, etc.) may also be utilized.

The example optical electronic device 100 is illustrated with the opto-electronic chips 140 and 180 directly laterally coupled to the glass component 120. For example, a respective lateral side of each of the opto-electronic chips 140 and 180 may butt up against a lateral side of the glass component 120. This coupling may also be referred to herein as butt-coupling. In such a coupling, the respective lateral side of each of the opto-electronic chips 140 and 180 may directly contact the lateral side of the glass component 120. Alternatively, a thin layer of epoxy may be utilized to fill a small gap between the lateral sides of the opto-electronic chips 140 and 180 and the lateral side of the glass component 120, and/or bond the lateral sides of the opto-electronic chips 140 and 180 to the lateral side of the glass component 120. Such a layer of epoxy may, for example, be index-matched and/or otherwise configured or formulated to maintain physical stability of the coupling while minimizing interference with light transmission between the opto-electronic chips 140 and 180 and the glass component 120. In a butt-coupled configuration, the opto-electronic chips 140 and 180 may have optical inputs and/or outputs at the lateral side coupled to the glass component 120. Note that the glass component 120 and/or the opto-electronic chips 140 and 180 may have structures that support butt-coupling. In another example configuration, a small gap between the lateral sides of the opto-electronic chips 140 and 180 and the lateral side of the glass component 120 may comprise an air gap.

Note that lateral sides of the glass component 120 and/or the opto-electronic chips 140 and 180 may, for example, comprise respective coatings to permit reflection free coupling. Alternatively, for example, as discussed herein, the glass component 120 and the opto-electronic chips 140 and 180 may be separated with an indexed-matched epoxy or separated with an air gap.

Note that the example optical electronic device 100 is illustrated with a single glass component 120 that is part of the receive and transmit paths. In an alternative implementation, multiple glass components may be utilized, for example a first glass component in a transmit path and a second glass component in a receive path, etc.

Also, as mentioned herein, the substrate 110 may comprise one or more layers of glass. In an implementation in which the substrate 110 comprises glass, and the optical component 120 comprises glass bonded (e.g., epoxied, glass-to-glass welded, etc.) to the substrate 110, such structure may be treated as a substrate (or circuit board) to which the other components may be mounted. For example, such a glass substrate 110 may comprise conductive vias (e.g., wires, conductive paste, plated via holes, etc.) extending therethrough for electrical connection and/or thermal conduction. In addition, such a glass substrate 110 may also have conductive pads, traces, and the like formed thereon.

The example optical electronic device 100 may, for example, comprise a trans-impedance amplifier chip (TIA) 150. The TIA 150 may, for example, amplify the photo current received from the opto-electronic receiver chip 140 (e.g., from a photodiode thereof) and form a desired signal voltage from the amplified photo current.

The example optical electronic device 100 may, for example, comprise a digital signal processor chip (DSP) 160. The DSP 160 may, for example, perform any of a variety of digital signal processing functions on the receive signal(s) from the TIA 150 and/or on the transmit signal(s) provided to the DRV 170 discussed below.

The example optical electronic device 100 may, for example, comprise a modulator driver chip (DRV) 170. The DRV 170 may, for example, amplify the transmit signal received from the DSP 160 to signal levels desired for operation of the opto-electronic transmitter (or modulator) chip 180.

Though not shown in Figure 1, the example optical electronic device 100 may comprise a cap or lid that covers one or more of the components of the optical electronic device 100. The cap or lid may, for example, interface with the substrate 110 to provide a hermetically sealed environment for the components coupled to the substrate 110. Additionally for example, though not shown in Figure 1, the example optical electronic device 100 may comprise a laser chip.

Figure 2 shows a cross-sectional view illustrating an example optical component and an example method of making an example optical component, in accordance with various aspects of the present disclosure.

The example optical component 200 may comprise a glass component 220 and an optical element 250. The glass component 220 may share any or all characteristics with any glass component discussed herein, for example the glass component 120. The optical element 250 may share any or all characteristics with any optical element discussed herein, for example the optical elements 150a, 150b, 150c, and 150d. The interface 270 between the optical element 250 and the glass component 220 may share any or all characteristics with any interface discussed herein, for example the respective interfaces between the glass component 120 and the optical elements 150a, 150b, 150c, and 150d, etc.

The glass component 220 may, for example, comprise only a single unitary piece of glass. The glass component 220 may also, for example, comprise a plurality of pieces of glass, for example stacked layers of glass. The glass component 220 may also, for example, comprise one or more reflective coatings and/or other materials discussed herein. The glass component 220 may also be referred to herein as a glass chip, a glass block, a glass, a glass part, a lower glass component, a glass, etc. As discussed herein with regard to the glass component 120, the glass component 220 may comprise and/or be made of silicon, InP, etc. Also for example, the glass component 220 may comprise and/or be made of any material that is transparent (or transparent enough) at the operating wavelength and which can be 3D structured. A component (e.g., glass or otherwise) may also be referred to herein as "component (C)."

The example glass component 220 comprises a plurality of features (e.g., three-dimensional structures) configured to perform respective optical functions. Such features may, for example, be formed utilizing any of a variety of processes, for example utilizing a pulsed laser with ultrashort laser pulses (e.g., a pico-second pulsed laser (or ps-pulsed laser), a femto-second pulsed laser (or fs-pulsed laser), etc.) and a non-linear effect (e.g., two photon absorption). A first example process comprises selective laser induced etching (SLE), which may also be referred to as laser induced dry etch (LIDE). In a first example process, a desired 3D structure is defined in the glass by locally modifying the glass adjacent to (or around) the desired 3D structure using a laser (e.g., an fs-pulsed laser, etc.), which makes the laser-modified glass relatively more susceptible to etching than the non-modified glass. After a 3D volume is defined by the fs-pulsed laser, which may also be referred to herein as "writing," the laser-modified (or written) volume of glass is subjected to an etch process (e.g., chemical etching, etc.) to etch away the laser-modified volume of glass such that the desired 3D structure remains. Additional processes may then be performed, for example to reduce surface roughness (e.g., laser polishing of etched surfaces, etc.), to add coatings and/or metallizations, to attach additional glass pieces, etc.

A second example process comprises waveguide writing, which utilizes a laser to locally modify (or write) glass along a 3D path within the glass. The modified (or written) glass may, for example, have a different refractive index than the non-modified surrounding glass, and thus the modified glass can function as a waveguide. As opposed to the SLE process discussed herein, the waveguide writing process might not include removal of the modified glass. In an example configuration, the modified glass of the waveguide may be radially (e.g., in a direction orthogonal to the general direction of light travel through the waveguide) surrounded by a non-modified surrounding portion of the glass. Note that the waveguide may have any of a variety of cross-section shapes (e.g., circular, elliptical, rectangular, square, etc.).

The example glass component 220 comprises a structured glass 221, a first waveguide 232, a first aperture 242, a first curved surface 241, a second aperture 244, a second curved surface 243, and a second waveguide 234.

The first waveguide 232 and the second waveguide 234 may, for example, be formed utilizing the waveguide writing process discussed herein. The volume of the first aperture 242 may, for example, be formed utilizing the SLE process discussed herein. For example, the first aperture 242 may be formed by laser-writing the volume of the first aperture 242 in the structured glass 221, followed by performing an etching process to remove the written volume. The formation of the first aperture 242 leaves the first curved surface 241. The curved surface 241 may then, for example and if desired, be coated with a reflective coating. The volume of the second aperture 244 may, for example, be formed utilizing the SLE process discussed herein. For example, the second aperture 244 may be formed by laser-writing the volume of the second aperture 244 in the structured glass 221, followed by performing an etching process to remove the written volume. The formation of the second aperture 244 leaves the second curved surface 243. The second curved surface 243 may then, for example and if desired, be coated with a reflective coating. Note that any of a variety of processes may be utilized for form apertures or other features. For example, in a scenario in which the structured glass 221 is formed from silicon or InP, a photolithography patterning process may be utilized. Also note that prior to forming a reflective coating for any of the mirrors discussed herein, laser polishing may be performed to smooth the surface on which the reflective coating is formed.

The first curved surface 241 may function as a curved mirror that receives an input light beam from the first waveguide 232. Note that when the input light beam leaves the first waveguide 232, the input light beam may begin to diverge. The first curved surface 241, configured as a mirror, may then collimate the light beam received from the first waveguide 232 and direct the collimated light beam as the first light beam 201 to the optical element 250 through the top side of the glass component 220 at a defined angle. An optical element may also be referred to herein as "optical element (OE)."

The example optical element 250 receives the first light beam 201, performs any of a variety of optical functions on the first light beam 201, and outputs the second light beam 202 (e.g., one or more light beams) back to the glass component 220. In an example implementation, the optical element 250 receives the first light beam 201, rotates the first light beam 201, and transmits the second light beam 202 as a rotated version of the first light beam 201 (e.g., rotated 90 degrees).

The second curved surface 243 may function as a curved mirror that receives the second light beam 202 from the optical element 250. The second curved surface 243, configured as a mirror, may then focus (if desired) and direct the second light beam 202 received from the optical element 250 to the second waveguide 234. The second curved surface 243 may also, for example, adjust a spot size of the second light beam 202 (or focus the second light beam 202) to enter the second waveguide 234 in a desired manner.

The second waveguide 234 may, for example, receive the directed light beam from the second curved surface 243 (or mirror formed therefrom) and propagate the beam to a device coupled to the right end of the second waveguide 234. For example, in the example optical electronic device 100 shown in Figure 1, the second waveguide 234 may direct light to an opto-electronic device (e.g., the opto-electronic receiver chip 140, etc.) butt-coupled to the right side of the glass component 220.

In the example optical component 200, the example optical element 250 comprises a glass 251 comprising a bottom side that is coupled to the top side of the example glass component 220, and a top side. The example optical component 250 also comprises a layer 252, which may comprise any of a variety of coatings (e.g., reflective coatings, polarization-specific reflective coatings, rotating material coatings, metallic coatings, voltage-controllable coatings, one or more other glass layers, epoxy layers, etc.). Note that any reflective coating discussed herein may be fully or partially reflective. Note that in various example implementations, the optical element 250 may also comprise an active element, such as a photodiode.

The general structure of the example glass component 220 and/or the general structure of the example optical element 250 may, for example, advantageously provide for substantial lateral flexibility in the placement of the example optical element 250. For example, the example optical element 250 as illustrated may be shifted laterally over 25% of its lateral width without substantially impacting the functionality of the optical component 200. Such placement flexibility may, for example, be designed into the glass component 220 and/or the optical element 250 to provide lateral placement flexibility substantially within the placement variability of a pick-and-place machine. For example, if a pick-and-place machine having a placement accuracy of 30 microns is to be utilized, the design of the glass component 220 and/or of the optical element 250 may be such that the lateral width of the optical element 250 may shift by 30 microns in any lateral direction without adversely impacting the functionality of the optical component 200. For example, any point at which light is expected to cross the interface 270 may be placed more than 30 microns (or, e.g., a multiple thereof, 125%, 150%, etc.) from the lateral edge of the optical element 250.

A bottom side of the optical element 250 may, for example, be coupled to a top side of the glass component 220. The optical element 250 may be coupled to the top side of the glass component 220 with epoxy, with glass-to-glass welding, by optical contacting (e.g., direct glass-to-glass contacting with no intervening epoxy or glass welding), etc. The interface 270 between the optical element 250 and the glass component 220 may, for example, be formed to have a minimal impact on the transmission of light between the optical element 250 and the glass component 220. For example, in an implementation in which the optical element 250 is adhered to the glass component 220 with an epoxy, an index-matched epoxy (e.g., having a same refractive index as glass) may be utilized. Also for example, in an implementation in which the optical element 250 is held to the glass component 220 using direct glass-to-glass optical contacting and/or glass-to-glass welding, the bottom side of the glass 251 of the optical element 250 may directly contact the top side of the structured glass 221 of the glass component 220 with no intervening material or space.

Note that in a scenario in which the example optical component 200 is incorporated into the example optical electronic device 100 of Figure 1, the left end of the first wave guide 232 may be coupled to an optical fiber (e.g., one of optical fiber 105, 106, and 107, etc.), and the right end of the second waveguide 234 may be coupled to an opto-electronic chip (e.g., the opto-electronic receiver chip 140, the opto-electronic transmitter chip 180, etc.). Though not shown in the example glass component 220, at the left end of the first wave guide 232, the example glass component 220 may comprise one or more features configured to receive, hold, and/or align optical fibers. Such features may, for example, comprise grooves, v-grooves, apertures, receptacles, etc. Additionally, in an example implementation, the glass component 220 may be attached to one or more fiber receptacle structures external to the glass component 220.

As discussed herein, the optical element 250 may, for example, be coupled to the glass component 220 utilizing optical contacting forces, for example direct glass-to-glass contacting with no intervening epoxy and no glass welding. The optical element 250 may also, for example, be coupled to the glass component 220 utilizing glass-to-glass welding, for example utilizing laser technology to weld the glass 251 of the glass element 250 to the structured glass 221 of the glass component 220 with no intervening epoxy. The example optical component 200 illustrates the bottom side of the glass 251 of the optical element 250 directly coupled to the top side of the structured glass 221 of the glass component 220 without any intervening material (and/or space) at the interface 270.

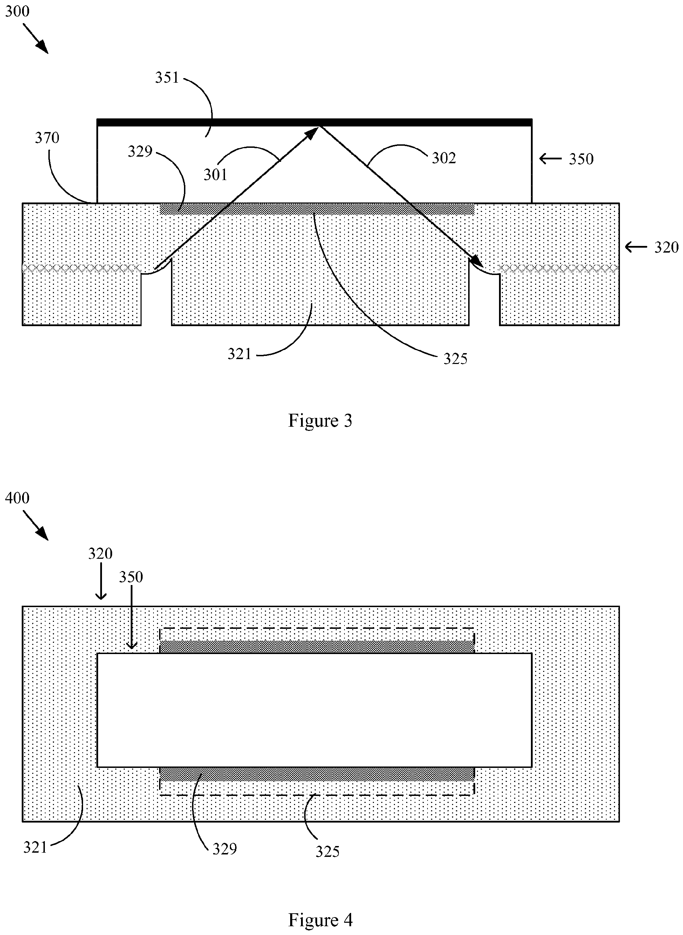

Figure 3 shows a cross-sectional view illustrating an example optical component and an example method of making an example optical component, in accordance with various aspects of the present disclosure. Figure 4 shows a top view illustrating an example optical component and an example method of making an example optical component, in accordance with various aspects of the present disclosure. Figures 3 and 4 may, for example, show a cross-sectional view 300 and a top view 400 of a same example optical component.

The example optical component 300 may comprise a glass component 320 and an optical element 350. The glass component 320 may share any or all characteristics with any glass component discussed herein, for example the glass components 120 and 220. For example, as discussed herein with regard to the glass component 120 and the glass component 220, the glass component 320 may comprise and/or be made of silicon, InP, etc. Also for example, the glass component 320 may comprise and/or be made of any material that is transparent (or transparent enough) at the operating wavelength and which can be 3D structured. The optical element 350 may share any or all characteristics with any optical element discussed herein, for example the optical elements 150a, 150b, 150c, 150d, and 250. The interface 370 between the optical element 350 and the glass component 320 may share any or all characteristics with any interface discussed herein, for example the interface 270, the respective interfaces between the glass component 120 and the optical elements 150a, 150b, 150c, and 150d, etc.

As discussed herein, the optical element 350 may, for example, be coupled to the glass component 320 utilizing an epoxy, for example an index-matched epoxy, etc. The example optical component 300 shown in Figure 3 illustrates the bottom side of the glass 351 of the optical element 350 directly coupled to the top side of the structured glass 321 of the glass component 320 utilizing an epoxy 329 at the interface 370.

In the example optical component 300, the glass component 320 (and/or the optical element 350) comprises a recess 325 (or indentation or reservoir or groove) in the top side of the structured glass 321. The recess 325 may, for example, provide a volume in which the epoxy 329 may be positioned. Note that the epoxy 329 may partially fill the recess 325, completely fill the recess 325, or overflow the recess 325. The example recess 325 is illustrated being laterally narrower than the optical element 350 in a first lateral direction (e.g., left-to-right in the cross-sectional view of Figure 3). In such an implementation, the optical element 350 may span the recess 325 so that the left and right lateral ends of the bottom side of the glass 351 may directly contact the top side of the structured glass 321. Such a structure may advantageously provide for a consistent vertical relationship between parts of the optical element 350 and parts of the glass component 320. Such a consistent vertical relationship may, for example, be independent of epoxy volume and/or placement variability during manufacturing. Note that the recess 325 may be formed utilizing a same process (e.g., an SLE process, etc.) as utilized to form the apertures 242, 244, etc.

In the example optical electronic device 300, the first light beam 301 and the second light beam 302 each pass through the epoxy 329. The epoxy 329 may thus be selected as an epoxy (e.g., an index-matched epoxy, for example having a same refractive index as glass) that will minimally impact the first light beam 301 and the second light beam 302.

Additionally, the example recess 325 is illustrated being laterally wider than the optical element 350 in a second lateral direction (e.g., top-to-bottom in the top view of Figure 4). Such a structure for the example recess 325 may advantageously provide for an overflow volume into which excess epoxy 329 may flow during manufacturing without impacting the vertical relationship between the optical element 350 and the glass component 320.

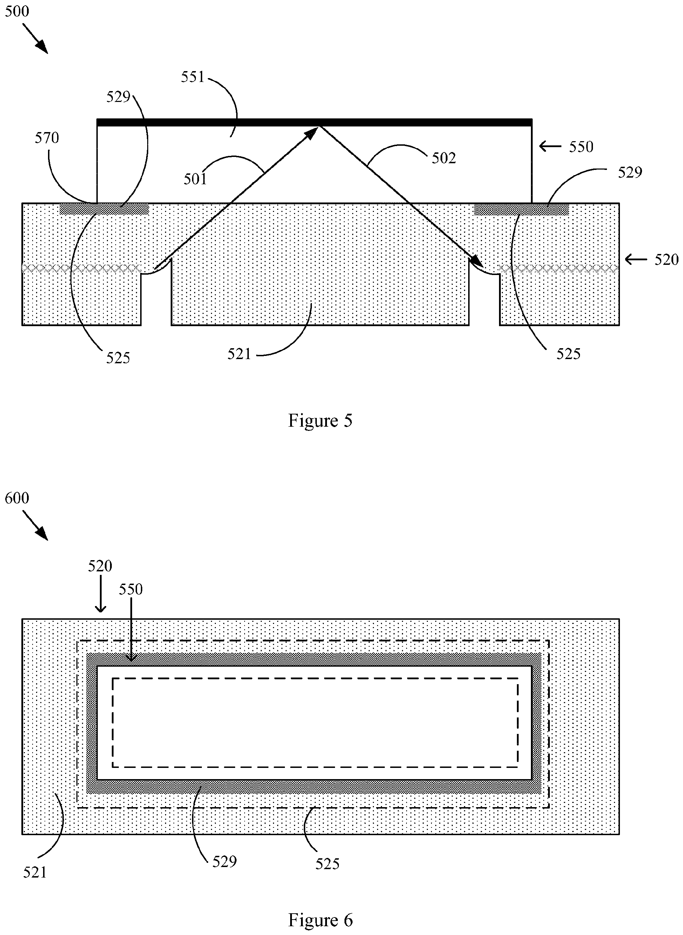

Note that in an alternative implementation, the example optical element 350 may span the recess 325 in a different lateral direction. The recess 325 may be configured in any of a variety of alternative configurations. Another example configuration is shown in Figures 5 and 6.

Figure 5 shows a cross-sectional view illustrating an example optical component and an example method of making an example optical component, in accordance with various aspects of the present disclosure. Figure 6 shows a top view illustrating an example optical component and an example method of making an example optical component, in accordance with various aspects of the present disclosure. Figures 5 and 6 may, for example, show a cross-sectional view 500 and a top view 600 of a same example optical component. The example optical component may comprise a glass component 520 and an optical element 550. The glass component 520 may share any or all characteristics with any glass component discussed herein, for example the glass components 120, 220, and 320. For example, as discussed herein with regard to the glass component 120, the glass component 220, and the glass component 320, the glass component 520 may comprise and/or be made of silicon, InP, etc. Also for example, the glass component 520 may comprise and/or be made of any material that is transparent (or transparent enough) at the operating wavelength and which can be 3D structured. The optical element 550 may share any or all characteristics with any optical element discussed herein, for example the optical elements 150a, 150b, 150c, 150d, 250, and 350. The interface 570 between the optical element 550 and the glass component 520 may share any or all characteristics with any interface discussed herein, for example the interface 370, the interface 270, the respective interfaces between the glass component 120 and the optical elements 150a, 150b, 150c, and 150d, etc.

As discussed herein, the optical element 550 may, for example, be coupled to the glass component 520 utilizing an epoxy, for example an index-matched epoxy, etc. The example optical component 500 illustrates the bottom side of the glass 551 of the optical element 550 directly coupled to the top side of the structured glass 521 of the glass component 520 utilizing an epoxy 529 at the interface 570.

In the example optical component 550, the glass component 520 (and/or the optical element 550) comprises a recess 525 (or indentation or reservoir or groove) in the top side of the structured glass 521. The recess 525 may, for example, provide a volume in which the epoxy 529 may be positioned. Note that the epoxy 529 may partially fill the recess 525, completely fill the recess 525, or overflow the recess 525. The example recess 525 is illustrated corresponding to a perimeter of a bottom side of the glass 551 of the optical element 550. In such an implementation, the optical element 550 may overhang the recess 525 so that the central area of the optical element 550 may directly contact the top side of the structured glass 521. Such a structure may advantageously provide for a consistent vertical relationship between parts of the optical element 550 and parts of the glass component 520. Such a consistent vertical relationship may, for example, be independent of epoxy volume and/or placement variability during manufacturing. Such a structure may also, for example, provide for the first light beam 501 and the second light beam 502 to travel through the glass 521 of the optical element 550 and the structure glass 521 of the glass component 520 without passing through an intervening layer of epoxy (or air). Additionally, the example recess 525 is illustrated extending laterally outside the boundary of the optical element 550. Such a structure for the example recess 525 may advantageously provide for an overflow volume into which excess epoxy 529 may flow during manufacturing without impacting the vertical relationship between the optical element 550 and the glass component 520.

As discussed herein, a glass component may comprise any number of 3D structures formed therein, and an optical element may comprise any number of layers of glass and/or other materials. Another example of an optical electronic device will now be presented.

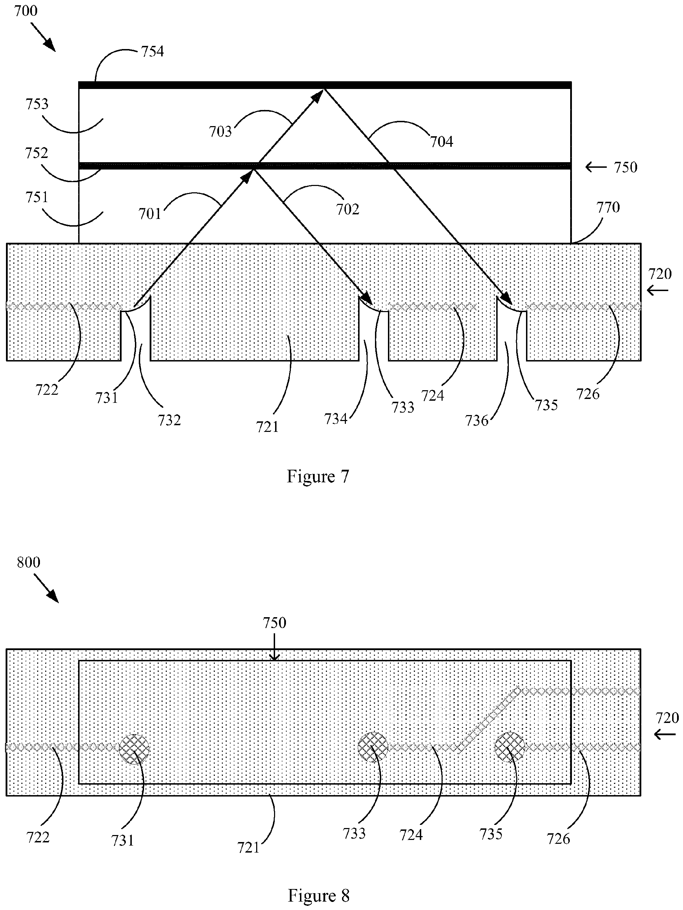

Figure 7 shows a cross-sectional view illustrating an example optical component and an example method of making an example optical component, in accordance with various aspects of the present disclosure. Figure 8 shows a top view illustrating an example optical component and an example method of making an example optical component, in accordance with various aspects of the present disclosure. Figures 7 and 8 may, for example, show a cross-sectional view 700 and a top view 800 of a same example optical component.

The example optical component 700 may, for example, comprise a polarization beam splitter (and/or a polarization beam combiner). The example optical component 700 may comprise a glass component 720 and an optical element 750. The glass component 720 may share any or all characteristics with any glass component discussed herein, for example the glass components 120, 220, 320, and 520. The optical element 750 may share any or all characteristics with any optical element discussed herein, for example the optical elements 150a, 150b, 150c, 150d, 250, 350, and 550. The interface 770 between the optical element 750 and the glass component 720 may share any or all characteristics with any interface discussed herein, for example the interfaces 270, 370, 570, the respective interfaces between the glass component 120 and the optical elements 150a, 150b, 150c, and 150d, etc.

The example glass component 720 may, for example, comprise only a single unitary piece of glass. The glass component 720 may also, for example, comprise a plurality of pieces of glass, for example stacked layers of glass. The glass component 720 may also, for example, comprise one or more reflective coatings and/or other materials discussed herein. The glass component 720 may also be referred to herein as a glass chip, a glass block, a glass, a glass part, a lower glass component, a glass, etc. As discussed herein with regard to the glass components 120, 220, 320, and 520, the glass component 720 may comprise and/or be made of silicon, InP, etc. Also for example, the glass component 720 may comprise and/or be made of any material that is transparent (or transparent enough) at the operating wavelength and which can be 3D structured.

The example glass component 720 comprises a plurality of features (e.g., three-dimensional structures) configured to perform respective optical functions. As discussed herein, such features may, for example, be formed utilizing any of a variety of processes (e.g., SLE, LIDE, waveguide writing, photolithography, etc.). Additional processes may then be performed, for example to reduce surface roughness (e.g., laser polishing of etched surfaces, etc.), to add coatings and/or metallizations, to weld or otherwise attach glass pieces, etc.

The example glass component 720 comprises a structured glass 721, a first waveguide 722, a first aperture 732, a first curved surface 731, a second aperture 734, a second curved surface 733, a second waveguide 724, a third aperture 736, a third curved surface 735, and a third waveguide 726.

The first waveguide 722, the second waveguide 724, and the third waveguide 726 may, for example, be formed utilizing the waveguide writing process discussed herein. The volume of the first aperture 732 may, for example, be formed utilizing the SLE process discussed herein. For example, the first aperture 732 may be formed by laser-writing the volume of the first aperture 732 in the structured glass 721, followed by performing an etching process to remove the written volume. The formation of the first aperture 732 leaves the first curved surface 731. The first curved surface 731 may then, for example and if desired, be coated with a reflective coating. The volume of the second aperture 734 may, for example, be formed utilizing the SLE process discussed herein. For example, the second aperture 734 may be formed by laser-writing the volume of the second aperture 734 in the structured glass 721, followed by performing an etching process to remove the written volume. The formation of the second aperture 734 leaves the second curved surface 733. The second curved surface 733 may then, for example and if desired, be coated with a reflective coating. The volume of the third aperture 736 may, for example, be formed utilizing the SLE process discussed herein. For example, the third aperture 736 may be formed by laser-writing the volume of the third aperture 736 in the structured glass 721, followed by performing an etching process to remove the written volume. The formation of the third aperture 736 leaves the third curved surface 735. The third curved surface 735 may then, for example and if desired, be coated with a reflective coating.

As mentioned herein, the optical electronic device 700 may perform a polarization beam splitting function. In an example scenario, the first wave guide 722 may receive (e.g., from a fiber, from an opto-electronic chip, etc.) an input light beam that comprises multiple polarized components, for example an X-polarization and a Y-polarization. Note that the X and Y polarizations may, for example, correspond to transverse electric (TE) polarizations, transverse magnetic (TM) polarizations, etc.

The first curved surface 731 may function as a curved mirror that receives an input light beam from the first waveguide 722. Note that when the input light beam leaves the first waveguide 722, the input light may begin to diverge. The first curved surface 731, configured as a mirror, may then collimate the light beam received from the first waveguide 722 and direct the collimated light beam as the first light beam 701 to the optical element 750 through the top side of the glass component 720 at a defined angle.

The example optical element 750 receives the first light beam 701 through the bottom side of the first glass 751 (or first material). Note that depending on the manner in which the optical element 750 is coupled to the glass component 720, the first light beam 701 (or any light beam traveling between the optical element 750 and the glass component 720) may travel through an epoxy and/or other intervening material or space. The first light beam 701 travels through the first glass 751 a defined distance determined by the defined angle and the thickness of the first glass 751.

The example optical element 750 comprises a polarization beam splitting (PBS) coating 752. The first light beam 701 travels through the first glass 751 and encounters the PBS coating 752. The X-polarized component 702 reflects off the PBS coating 752 as the reflected X-polarized component 702, and the Y-polarized component 703 travels through (or transmits through) the PBS coating 752.

The reflected X-polarized component 702 travels back through the first glass 751, through the interface 770, and through a portion of the structured glass 721 to encounter the second curved surface 733.

The second curved surface 733 may function as a curved mirror that receives the reflected X-polarized component 702 from the optical element 750. The second curved surface 733, configured as a curved mirror, may then focus (if desired) and direct the reflected X-polarized component 702 received from the optical element 750 to the second waveguide 724. The second curved surface 733 may also, for example, adjust a spot size of the reflected X-polarized component 702 (or focus the reflected X-polarized component 702) to enter the second waveguide 724 in a desired manner.

The second waveguide 724 may, for example, receive the directed light beam from the second curved surface 733 (or mirror formed therefrom) and propagate the beam to a device coupled to the right end of the second waveguide 724. For example, in the example optical electronic device 700 shown in Figures 7 and 8, the second waveguide 724 may direct light to an opto-electronic device (e.g., the opto-electronic receiver chip 140, etc.) butt-coupled to the right side of the glass component 720.

The Y-polarized component 703 travels through the PBS coating 752, through the second glass 753 (or second material), and encounters the reflective coating 754. The Y-polarized component 703 reflects off the reflective coating as the reflected Y-polarized component 704. The reflected Y-polarized component 704 travels back through the second glass 753, through the PBS coating 752, and through a portion of the structured glass 721 to encounter the third curved surface 735.

The third curved surface 735 may function as a curved mirror that receives the reflected Y-polarized component 704 from the optical element 750. The third curved surface 735, configured as a curved mirror, may then focus (if desired) and direct the reflected Y-polarized component 704 received from the optical element 750 to the third waveguide 726. The third curved surface 735 may also, for example, adjust a spot size of the reflected Y-polarized component 704 (or focus the reflected Y-polarized component 704) to enter the third waveguide 726 in a desired manner.

The third waveguide 726 may, for example, receive the directed light beam from the third curved surface 735 (or mirror formed therefrom) and propagate the beam to a device coupled to the right end of the third waveguide 726. For example, in the example optical electronic device 700 shown in Figures 7 and 8, the third waveguide 726 may direct light to an opto-electronic device (e.g., the opto-electronic receiver chip 140, etc.) butt-coupled to the right side of the glass component 720.

As illustrated by the combination of Figures 7 and 8, the second waveguide 724 may be configured to route light laterally around the third curved surface 735 and the third waveguide 726. In such a configuration, the second waveguide 724 and the third waveguide 726 may be at a same vertical height of the glass component 720. Such an arrangement may be beneficial in coupling the glass component 720 to an adjacent device (e.g., an opto-electronic receiver chip 140, etc.). Alternatively for example, the second waveguide 724 and the third waveguide 726 may be formed at different respective vertical heights.

Note that an example optical electronic device with a very similar or same structure as the example optical electronic device 700 may be utilized to combine two polarized light beams into a single light beam. For example, respective polarized light beams may be transmitted to the right ends of the second wave guide 724 and the third wave guide 726 (e.g., by a modulator circuit and/or a beam rotation element), which may then travel in a direction opposite the arrows shown in Figure 7, to be combined as light beam 701 having multiple polarizations and output through the first wave guide 722.

The general structure of the example glass component 720 may, for example, advantageously provide for substantial lateral flexibility in the placement of the example optical element 750. For example, the example optical element 750 as illustrated may be shifted laterally over 25% of its lateral width without substantially impacting the functionality of the optical component 700. Such placement flexibility may, for example, be designed into the glass component 720 and/or the optical element 750 to provide lateral placement flexibility substantially within the placement variability of a pick-and-place machine. For example, if a pick-and-place machine having a placement accuracy of 30 microns is to be utilized, the design of the glass component 720 and/or of the optical element 750 may be such that the lateral width of the optical element 750 may shift by 30 microns in any lateral direction without adversely impacting the functionality of the optical component 700. For example, any point at which light is expected to cross the interface 770 may be placed more than 30 microns (or, e.g., a multiple thereof, 125%, 150%, etc.) from the lateral edge of the optical element 750.

A bottom side of the optical element 750 may, for example, be coupled to a top side of the glass component 720. The optical element 750 may be coupled to the top side of the glass component 720 with epoxy, with glass-to-glass welding, by optical contacting (e.g., direct glass-to-glass contacting with no intervening epoxy or glass welding), etc. The interface 770 between the optical element 750 and the glass component 720 may, for example, be formed to have a minimal impact on the transmission of light between the optical element 750 and the glass component 720. For example, in an implementation in which the optical element 750 is adhered to the glass component 720 with an epoxy, an index-matched epoxy (e.g., having a same refractive index as glass) may be utilized. Various examples of such epoxy bonding are provided herein. Also for example, in an implementation in which the optical element 750 is held to the glass component 720 using direct glass-to-glass optical contacting and/or glass-to-glass welding, the bottom side of the glass 751 of the optical element 750 may directly contact the top side of the structured glass 721 with no intervening material or space.

Note that in a scenario in which the example optical component 700 is incorporated into the example optical electronic device 100 of Figure 1, the left end of the first wave guide 722 may be coupled to an optical fiber (e.g., one of optical fiber 105, 106, and 107, etc.), and the right end of the second waveguide 724 and the right end of the third waveguide 726 may be coupled to an opto-electronic chip (e.g., the opto-electronic receiver chip 140, the opto-electronic transmitter chip 180, etc.). Though not shown in the example glass component 720, at the left end of the first wave guide 722, the example glass component 720 may comprise one or more features configured to receive, hold, and/or align optical fibers. Such features may, for example, comprise grooves, v-grooves, apertures, receptacles, etc. Additionally, in an example implementation, the glass component 720 may be attached to one or more fiber receptacle structures external to the glass component 720.

The example optical electronic devices discussed herein to this point include waveguides formed in the glass components. Such waveguides, however, are not required. An example optical electronic device will now be presented, which includes no waveguides formed in the glass component. For example, light beams may be transmitted internally through non-modified glass in a free-space manner.

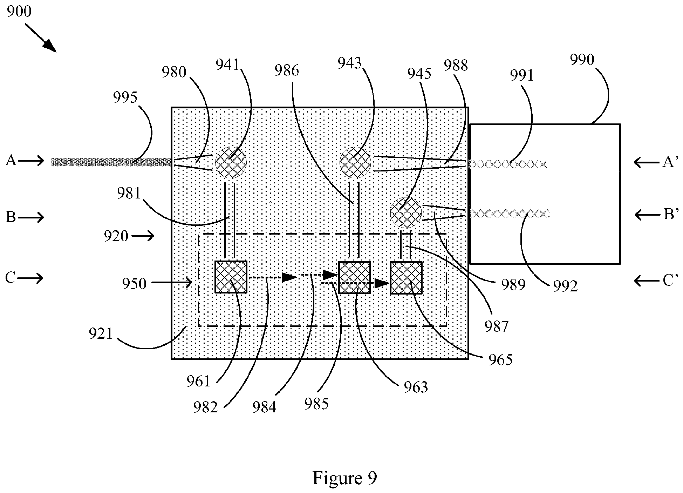

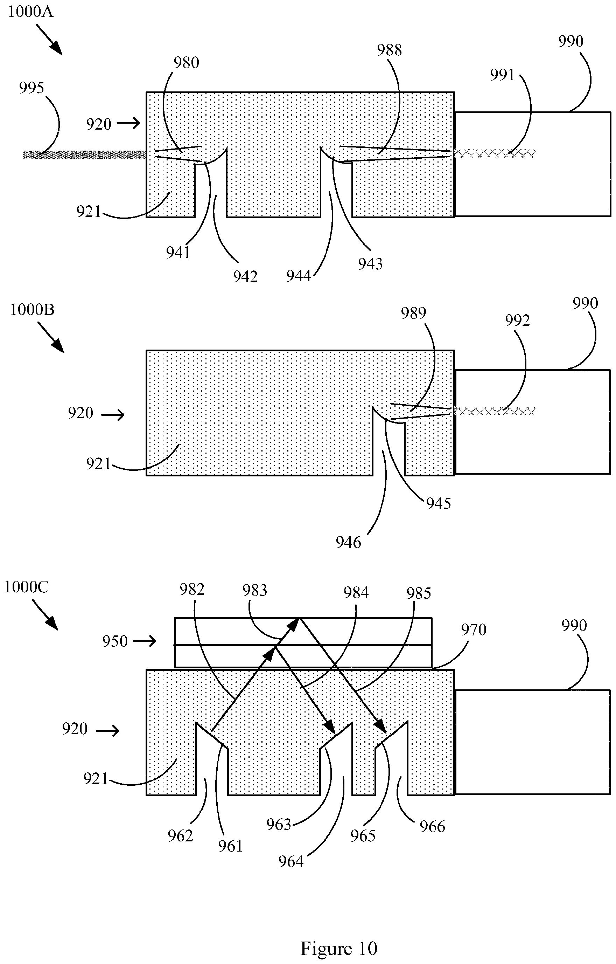

Figure 9 shows a top view illustrating an example optical component and an example method of making an example optical component, in accordance with various aspects of the present disclosure. Figure 10 shows cross-sectional views illustrating an example optical component and an example method of making an example optical component, in accordance with various aspects of the present disclosure. Figures 9 and 10 may, for example, show a top view 900 and cross-sectional views 1000A, 1000B, and 1000C of a same example optical component. For example, Figure 10 shows a cross-sectional view 1000A along line A-A' of Figure 9, a cross-sectional view 1000B along line B-B' of Figure 9, and a cross-sectional view 1000C along line C-C' of Figure 9.

The example optical component 900 may, for example, comprise a polarization beam splitter (and/or a polarization beam combiner). The example optical component 900 may comprise a glass component 920 and an optical element 950. The glass component 920 may share any or all characteristics with any glass component discussed herein, for example the glass components 120, 220, 320, 520, and 720. The optical element 950 may share any or all characteristics with any optical element discussed herein, for example the optical elements 150a, 150b, 150c, 150d, 250, 350, 550, and 750. The interface 970 between the optical element 950 and the glass component 920 may share any or all characteristics with any interface discussed herein, for example the interfaces 270, 370, 570, 770, the respective interfaces between the glass component 120 and the optical elements 150a, 150b, 150c, and 150d, etc.

The example glass component 920 may, for example, comprise only a single unitary piece of glass. The glass component 920 may also, for example, comprise a plurality of pieces of glass, for example stacked layers of glass. The glass component 920 may also, for example, comprise one or more reflective coatings and/or other materials discussed herein. The glass component 920 may also be referred to herein as a glass chip, a glass block, a glass, a glass part, a lower glass component, a glass, etc. As discussed herein with regard to the glass components 120, 220, 320, 520, and 720, the glass component 920 may comprise and/or be made of silicon, InP, etc. Also for example, the glass component 920 may comprise and/or be made of any material that is transparent (or transparent enough) at the operating wavelength and which can be 3D structured.

The example glass component 920 comprises a plurality of features (e.g., three-dimensional structures) configured to perform respective optical functions. As discussed herein, such features may, for example, be formed utilizing any of a variety of processes (e.g., SLE, LIDE, waveguide writing, photolithography, etc.). Additional processes may then be performed, for example to reduce surface roughness (e.g., laser polishing of etched surfaces, etc.), to add coatings and/or metallizations, to weld or otherwise attach glass pieces, etc.

The example glass component 920 comprises a structured glass 921, a first aperture 942, a first curved surface 941, a second aperture 944, a second curved surface 943, a third aperture 946, a third curved surface 945, a fourth aperture 962, a first flat surface 961, a fifth aperture 964, a second flat surface 963, a sixth aperture 966, and a third flat surface 965.

The volume of the first aperture 942 may, for example, be formed utilizing the SLE process discussed herein. For example, the first aperture 942 may be formed by laser-writing the volume of the first aperture 942 in the structured glass 921, followed by performing an etching process to remove the written volume. The formation of the first aperture 942 leaves the first curved surface 941. The first curved surface 941 may then, for example and if desired, be coated with a reflective coating.

The volume of the second aperture 944 may, for example, be formed utilizing the SLE process discussed herein. For example, the second aperture 944 may be formed by laser-writing the volume of the second aperture 944 in the structured glass 921, followed by performing an etching process to remove the written volume. The formation of the second aperture 944 leaves the second curved surface 943. The second curved surface 943 may then, for example and if desired, be coated with a reflective coating.

The volume of the third aperture 946 may, for example, be formed utilizing the SLE process discussed herein. For example, the third aperture 946 may be formed by laser-writing the volume of the third aperture 946 in the structured glass 921, followed by performing an etching process to remove the written volume. The formation of the third aperture 946 leaves the third curved surface 945. The third curved surface 945 may then, for example and if desired, be coated with a reflective coating.

The volume of the fourth aperture 962 may, for example, be formed utilizing the SLE process discussed herein. For example, the fourth aperture 962 may be formed by laser-writing the volume of the fourth aperture 962 in the structured glass 921, followed by performing an etching process to remove the written volume. The formation of the fourth aperture 962 leaves the first flat surface 961. The first flat surface 961 may then, for example and if desired, be coated with a reflective coating.

The volume of the fifth aperture 964 may, for example, be formed utilizing the SLE process discussed herein. For example, the fifth aperture 964 may be formed by laser-writing the volume of the fifth aperture 964 in the structured glass 921, followed by performing an etching process to remove the written volume. The formation of the fifth aperture 964 leaves the second flat surface 963. The second flat surface 961 may then, for example and if desired, be coated with a reflective coating.

The volume of the sixth aperture 966 may, for example, be formed utilizing the SLE process discussed herein. For example, the sixth aperture 966 may be formed by laser-writing the volume of the sixth aperture 966 in the structured glass 921, followed by performing an etching process to remove the written volume. The formation of the sixth aperture 966 leaves the third flat surface 965. The third flat surface 966 may then, for example and if desired, be coated with a reflective coating.

Note that any of the curved surfaces 941, 943, and 945 may be formed as flat surfaces where desired, and any of the flat surfaces 961, 963, and 965 may be formed as curved surfaces where desired.

As mentioned herein, the example optical electronic device 900 may perform a polarization beam splitting function. Alternatively, an optical electronic device having a similar or same structure as the example optical electronic device 900 may perform a polarization beam combining function.

In an example scenario, an input light beam may be received from an optical fiber 995 (or an opto-electronic device, etc.). After entering the structured glass 921, the input light beam travels through the structured glass 921 as a first light beam 980. The first light beam 980 travels to the first curved surface 941. As the first light beam 980 travels to the first curved surface 941, the first light beam 980 may diverge.

The first curved surface 941 may function as a curved mirror that receives the first light beam 980 through the structured glass 921, for example without the first light beam traveling through a waveguide. The first curved surface 941, configured as a mirror, may then collimate the first light beam 980 and direct the collimated first light beam 980 to the first flat surface 961 as a second light beam 981. The first flat surface 961 may function as a flat mirror that receives the second light beam 981 and reflects the second light beam 981 as a third light beam 982 to the optical element 950 through the top side of the glass component 920 at a defined angle.

The example optical element 950 may, for example, be configured the same as (or configured to operate the same as) the example optical element 750 of Figure 7. For example, the example optical element 950 may receive the third light beam 982 from the example glass component 920, and reflect an X-polarized component of the third light beam 982 back down to the example glass component 920 as a fourth light beam 984. Also for example, the example optical element 950 may receive the third light beam 982 from the example glass component 920 and reflect a Y-polarized component 983 of the third light beam 982 back down to the example glass component 920 as a fifth light beam 985.

The fourth light beam 984 travels from the optical element 950 through the interface 970, and through a portion of the structured glass 921 to encounter the second flat surface 963. The fifth light beam 985 travels from the optical element 950 through the interface 970, and through a portion of the structured glass 921 to encounter the third flat surface 965.

The second flat surface 963 reflects the fourth light beam 984 to the second curved surface 943 as a sixth light beam 986. The third flat surface 965 reflects the fifth light beam 985 to the third curved surface 945 as a seventh light beam 987.

The second curved surface 943 may function as a curved mirror that receives the sixth light beam 986. The second curved surface 943, configured as a curved mirror, may then focus and direct the sixth light beam 986 to a first waveguide 991 of an opto-electronic chip 990 (e.g., the opto-electronic receiver chip 140, etc.) as an eighth light beam 988. For example, in an example implementation in which the opto-electronic chip 990 is butt-coupled to the structured glass 921 of the glass component 920, the first waveguide 991 can form the eighth light beam 988 to have a particular spot size when the eighth light beam 988 encounters the first wave guide 991 of the opto-electronic chip 990.

Similarly, the third curved surface 945 may function as a curved mirror that receives the seventh light beam 987. The third curved surface 945, configured as a curved mirror, may then focus and direct the seventh light beam 987 to a second waveguide 992 of the opto-electronic chip 990 (e.g., the opto-electronic receiver chip 140, etc.) as a ninth light beam 989. For example, in an example implementation in which the opto-electronic chip 990 is butt-coupled to the structured glass 921 of the glass component 920, the second waveguide 992 can form the ninth light beam 989 to have a particular spot size when the ninth light beam 989 encounters the second wave guide 992 of the opto-electronic chip 990. Note that the opto-electronic chip 990 may be coupled to the structured glass 921 through an air gap.

As illustrated by the combination of Figures 9 and 10, various 3D structures in the structured glass 921 (e.g., the second flat surface 963 and the second curved surface 943, etc.) may be configured to route light laterally around the third glass surface 965 and the third curved surface 945. In such a configuration, a first optical interface between the eighth light beam 988 and the first wave guide 991 of the opto-electronic chip 990 and a second optical interface between the ninth light beam 989 and the second wave guide 992 of the opto-electronic chip 990 may be at a same vertical height of the glass component 920. Such an arrangement may be beneficial in coupling the glass component 920 to an adjacent device, such as the opto-electronic chip 990, an array of fibers, etc.

In an example scenario, the opto-electronic chip 990 may comprise an opto-electronic receiver chip (e.g., the opto-electronic receiver chip 140 of Figure 1) and/or any of a variety of opto-electronic chips or devices.

Note that an example optical electronic device with a very similar or same structure as the example optical electronic device 900 may be utilized to combine two polarized light beams (e.g., two perpendicularly polarized light beams, etc.) into a single light beam. For example, respective polarized light beams may be transmitted to the right side of the structured glass 921 in such a way that each of the second curved surface 943 and the third curved surface 945 receives a respective polarized light beam. For example, the opto-electronic chip 990 may comprise an opto-electronic transmitter (or modulator) chip (e.g., the opto-electronic transmitter or modulator chip 140 of Figure 1) and/or any of a variety of opto-electronic chips or devices. In such an example configuration, the light beams will travel in a direction opposite that discussed above with regard to the example optical electronic device 900 to be combined as the first light beam 980 and output to the optical fiber 995.

As discussed herein with regard to other example optical electronic devices (e.g., example optical devices 200, 300, 500, and 700), the general structure of the example glass component 920 may, for example, advantageously provide for substantial lateral flexibility in the placement of the example optical element 950.

Though various methods of making the example devices or components have been presented throughout this discussion, a flow diagram will now be presented and discussed to summarize various manufacturing aspects.

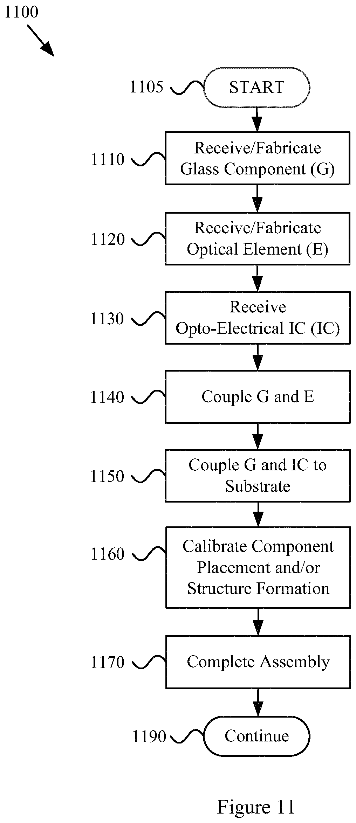

Figure 11 shows an example method of making an optical electronic device, in accordance with various aspects of the present disclosure. The example method 1100 may, for example, share any or all characteristics with any other example methods and/or structures discussed herein (*e.g.,* with regard to any or all of Figures 1-10). Note that the scope of this disclosure is not limited to any particular order of the method blocks (or steps) discussed herein.

The example method 100 may begin executing at block 1105. The method 100 may begin executing in response to any of a variety of causes or conditions, non-limiting examples of which are provided herein. For example, the method 1100 may begin executing automatically in response to one or more signals received from one or more upstream and/or downstream manufacturing stations, in response to a signal from a central manufacturing line controller, etc. Also for example, the method 1100 may begin executing in response to an operator command to begin.

The example method 1100 may, at block 1110, comprise receiving or fabricating a glass component. Block 1110 may comprise receiving or fabricating a glass component in any of a variety of manners, non-limiting examples of which are provided herein.

For example, block 1110 may receiving a glass component (or a plurality thereof) comprising any or all aspects of the example glass components discussed herein (e.g., glass component 120, glass component 220, glass component 320, glass component 520, glass component 720, glass component 920, etc.). Also, for example, block 1110 may comprise fabricating or manufacturing any or all of the glass components discussed herein (e.g., glass component 120, glass component 220, glass component 320, glass component 520, glass component 720, glass component 920, etc.) or any portion thereof.

For example, as discussed herein, block 1110 may comprise forming three-dimensional structures in a piece of structured glass by, at least in part, utilizing a femto-second pulsed laser (or fs-pulsed laser) and a non-linear effect (e.g., two photon absorption). For example, block 1110 may comprise utilizing selective laser induced etching (SLE), which may also be referred to as laser induced dry etch (LIDE). For example, a desired 3D structure may be defined in the glass by locally modifying the glass adjacent to (or around) the desired 3D structure using a laser (e.g., an fs-pulsed laser, etc.), which makes the laser-modified glass relatively more susceptible to etching than the non-modified glass. After a 3D volume is defined by the fs-pulsed laser, which may also be referred to herein as "writing," the laser-modified (or written) volume of glass is subjected to an etch process (e.g., chemical etching, etc.) to etch away the laser-modified volume of glass such that the desired 3D structure remains. Utilizing such a process, or one or more other processes, block 1110 may form any of a variety of 3D structures, for example, any or all of the apertures and curved or flat surfaces discussed herein.

Additional processes may then be performed, for example to reduce surface roughness (e.g., laser polishing of etched surfaces, etc.), to add coatings and/or metallizations, to weld or otherwise attach glass pieces, etc. For example, as discussed herein, the curved or flat surfaces may be coated with a reflective material, with a polarization-specific reflective material, with a rotatory material (e.g., a dextrorotatory material, a levorotatory material, etc.), with a thin film coating, with a voltage-controllable attenuation material, with a conductive material, with a dielectric material, with a metallic material, etc.).

In an example implementation, block 1110 may comprise stacking a plurality of layers of glass. Such layers of glass may, for example, directly contact each other and/or be separated from each other by one or more intervening layers (e.g., any of the materials discussed herein). Layers of glass may be coupled utilizing epoxy, utilizing glass-to-glass welding, utilizing direct glass-to-glass contacting, etc.

Looking ahead briefly to block 1150 regarding coupling various components to a substrate, an example implementation may comprise utilizing a glass layer of the glass component as the substrate. For example, a lower glass layer of the glass component received or fabricated at block 1110 may extend laterally to provide a shelf to which other components (e.g., optical electrical components, electrical components, purely optical components, etc.) may be coupled.

Block 1110 may additionally, for example, comprise forming one or more waveguides in a piece of structured glass by, at least in part, utilizing a waveguide writing process. For example, block 1110 may comprise utilizing a laser to locally modify (or write) a 3D path within bulk glass. The modified (or written) glass may, for example, have a different refractive index than the surrounding glass, and thus the modified glass can function as a waveguide. As opposed to the SLE process discussed herein, the waveguide writing process might not include removal of the modified glass. Block 1110 may, for example, comprise forming any of the waveguide structures discussed herein utilizing such a process.

Note that block 1110 may be performed at a panel (or wafer) level. For example, block 1110 may comprise forming a panel of the glass components in such a configuration that the panel of glass components are wholly or partially connected to each other while the 3D structures are formed in the glass components, while layers are formed, etc.

In general, block 1110 may comprise receiving or fabricating a glass component. Accordingly, the scope of this disclosure should not be limited by characteristics of any particular manner of such receiving and/or fabricating, nor by any particular characteristics of glass components.

The example method 1100 may, at block 1120, comprise receiving or fabricating an optical element. Block 1120 may comprise receiving or fabricating an optical element in any of a variety of manners, non-limiting examples of which are provided herein.

For example, block 1120 may comprise receiving an optical element (or a plurality thereof) comprising any or all aspects of the example optical elements discussed herein (e.g., optical element 150a, optical element 150b, optical element 150c, optical element 150d, optical element 220, optical element 350, optical element 550, optical element 750, optical element 950, etc.). Also, for example, block 1120 may comprise fabricating or manufacturing any or all of the optical elements discussed herein (e.g., optical element 150a, optical element 150b, optical element 150c, optical element 150d, optical element 220, optical element 350, optical element 550, optical element 750, optical element 950, etc.) or any portion thereof.

The example optical elements discussed herein generally comprise a plurality of layers. Such layers may, for example, comprise a glass layer, a reflective material layer, a polarization-specific reflective material layer, a rotatory material layer (e.g., a dextrorotatory material, a levorotatory material, etc.) layer, a voltage-controllable attenuation material layer, a conductive material layer, a dielectric material layer, a metallic material layer, an epoxy layer, a thin film layer, etc. Block 1120 may, for example, comprise forming any or all of such layers.

For example, block 1120 may comprise forming one or more glass layers. For example, block 1120 may comprise coupling a glass layer to another glass layer, a coating layer, etc. Block 1120 may, for example, coupling a plurality of layers of glass utilizing epoxy, direct glass-to-glass welding, direct glass-to-glass contacting, etc.

Also for example, block 1120 may comprise forming one or more coating layers. For example, block 1120 may comprise forming any of the coating layers discussed herein. Block 1120 may comprise forming such coating layers in any of a variety of manners. For example, block 1120 may comprise forming coating layers utilizing chemical vapor deposition (CVD) (e.g., atomic-layer deposition (ALD), etc.), physical vapor deposition (PVD) (e.g., sputtering, evaporation, etc.), printing, flooding, dipping, spin-coating, etc.

Although not specifically shown in Figures 1-10, an optical element may comprise one or more layers of glass comprising any or all of the 3D structures discussed herein with regard to the glass components (e.g., apertures, surfaces, waveguides, etc.). In such an implementation, block 1120 may comprise utilizing any of the processes discussed herein to form such features.

Note that block 1120 may be performed at a panel (or wafer) level. For example, block 1120 may comprise forming a panel of the optical elements in such a configuration that the panel of optical components are wholly or partially connected to each other while the layers and/or structures are formed in the optical elements, etc. Singulation may, for example, be performed at any point.

In general, block 1120 may comprise receiving or fabricating an optical element. Accordingly, the scope of this disclosure should not be limited by characteristics of any particular manner of such receiving and/or fabricating, nor by any particular characteristics of optical elements.

The example method 1100 may, at block 1130, comprise receiving an opto-electronic integrated circuit. Block 1130 may comprise receiving an opto-electrical integrated circuit in any of a variety of manners, non-limiting examples of which are provided herein.

The received opto-electronic integrated circuit(s) may, for example, share any or all characteristics with the example opto-electronic integrated circuit(s) discussed herein (e.g., the opto-electronic receiver chip 140, the opto-electronic transmitter chip 180, the opto-electronic chip 990, etc.)

The received opto-electronic integrated circuit(s) may, for example, comprise one or more bare semiconductor dies (or chips). The received opto-electronic integrated circuit(s) may also, for example, comprise any of a variety of integrated circuit types, for example, packaged dies, etc.

The received opto-electronic integrated circuit(s) may comprise any of a variety of types of semiconductors. For example, the received opto-electronic integrated circuit(s) may comprise Indium Phosphide (InP) semiconductors. The received opto-electronic integrated circuit(s) may also, for example, comprise silicon-based semiconductors, germanium-based semiconductors, etc.

Block 1130 may comprise receiving one or more opto-electronic integrated circuits from an upstream fabricating process, from an upstream testing process, from a shipping process, etc.

In general, block 1130 may comprise receiving an opto-electronic integrated circuit. Accordingly, the scope of this disclosure should not be limited by characteristics of any particular manner of such receiving, nor by any particular characteristics of opto-electronic integrated circuits.

The example method 1100 may, at block 1140, comprise coupling the glass component and the optical element to each other. Block 1140 may comprise coupling the glass component (e.g., the one or more glass components received or fabricated at block 1110) and the optical element (e.g., the one or more optical elements received or fabricated at block 1120) to each other in any of a variety of manners, non-limiting examples of which are provided herein.

Block 1140 may, for example, comprise coupling the optical element (or a plurality thereof) to the glass component with an epoxy (e.g., an index-matched epoxy, etc.). Also for example, block 1140 may comprise coupling the optical element (or a plurality thereof) to the glass component using a glass-to-glass welding process (e.g., laser welding, etc.). Additionally for example, block 1140 may comprise coupling the optical element (or a plurality thereof) to the glass component by optical contacting (e.g., direct glass-to-glass contacting with no intervening epoxy or glass welding).

In an example implementation, block 1140 may be performed at the panel (or wafer) level. For example, in a scenario in which block 1110 comprises receiving and/or forming the glass components (or chips) in a panel (or wafer) form (e.g., including a plurality of glass components), block 1140 may comprise coupling the optical elements to an entire panel (or wafer) of the glass components. The individual assemblies of the glass components and optical elements may then, for example, be excised from the panel, for example by mechanical cutting or other singulation process. In an example implementation, block 1140 may comprise forming an entire panel (or wafer) of optical components before singulating such panel into individual components.

In general, block 1140 may comprise coupling the glass component(s) and the optical element(s) to each other. Accordingly, the scope of this disclosure should not be limited by characteristics of any particular manner of performing such coupling.

The example method 1100 may, at block 1150, comprise coupling the glass component and opto-electronic chip to a substrate. Block 1150 may comprise coupling (or mounting) the glass component (or plurality thereof) and the opto-electronic chip (or plurality thereof) to a substrate in any of a variety of manners, non-limiting examples of which are provided herein.

As discussed herein, the substrate may comprise any of a variety of different materials. For example, the substrate may comprise a ceramic material. Also for example, the substrate may comprise a glass material, a metal material, a semiconductor material, an epoxy resin material, etc. The substrate may, for example, share any or all characteristics with any substrate (or carrier) discussed herein (e.g., the substrate 110, etc.).

The glass component (or a plurality thereof) may be coupled to the substrate in any of a variety of manners. For example, the glass component may be adhered to the substrate with an epoxy. Also for example, the glass component may be welded to the substrate using a glass-to-glass welding technique. Additionally for example, the glass component may be held to the substrate using optical contacting (e.g., direct glass-to-glass contacting with no intervening material or glass welding), etc.

As discussed herein, in an example implementation (e.g., performed at block 1110), the glass component may be formed with a lower layer of glass that serves as the substrate for an entirety (or a portion) of the optical electronic device. In such an implementation, the lower layer of glass may be considered to be a part of the glass component and also as the substrate.

As discussed herein, the order of various blocks of the example method 1100 may be different from the order shown and discussed herein. As an example, when the glass component is mounted to the substrate, the glass component might or might not have the optical element(s) already coupled thereto (e.g., as shown at block 1140 and discussed herein). In an example implementation in which the glass component is mounted to the substrate prior to the coupling of one or more optical elements to the glass component, the coupling of the optical element(s) to the glass component may, for example, be performed at method block 1150.

An opto-electronic chip may share any or all characteristics with any opto-electronic chip discussed herein (e.g., the opto-electronic receiver chip 140, the opto-electronic transmitter chip 180, the opto-electronic chip 990, a laser chip, etc.).

An opto-electronic chip (or a plurality thereof) may be coupled to the substrate in any of a variety of manners. For example, the opto-electronic chip may be adhered to the substrate with an epoxy, a die-attach film, etc. Also for example, in an implementation where the substrate comprises contact pads, the opto-electronic chip may be flip-chip bonded (e.g., soldered, epoxied, solderless metal-to-metal bonded, etc.).

As discussed herein, an opto-electronic chip may be laterally directly coupled (e.g., butt-coupled) to a glass component. For example, block 1150 may comprise coupling an opto-electronic chip to the substrate such that a lateral side of the opto-electronic chip directly contacts a lateral side of the glass component. Also for example, block 1150 may comprise bonding a lateral side of the opto-electronic chip to a lateral side of the glass component with a thin layer of epoxy. In such an example implementation, an epoxy (e.g., an index-matched epoxy) may be positioned in a small gap between the opto-electronic chip and the glass component. Example illustrations of such coupling are provided in Figure 1 (e.g., between the glass component 120 and the opto-electronic receiver chip 140, between the glass component 120 and the opto-electronic transmitter chip 180, etc.) and in Figures 9 and 10 (e.g., between the glass component 920 and the opto-electronic chip 990, etc.). Note that coupling an opto-electronic chip to a glass component may be performed before or after mounting to a substrate.

Block 1150 may comprise coupling the opto-electronic chip to the substrate in a face down (or contacts-down) orientation (e.g., in a flip-chip manner) or in a face up (or contacts-up) orientation. In a face up orientation, block 1150 may comprise forming electrical connections to the opto-electronic chip using a wire-bonding process or other manner of forming electrical connections.

Note that the examples presented herein show the opto-electronic chips and the glass components being formed and mounted for side-coupling, in which the optical signals travel laterally between the glass components and the opto-electronic chips and/or fibers. This orientation is an example, and by no means limiting. For example, the aspects presented herein also readily apply to configurations in which optical signals travel between the glass components and the opto-electronic chips and/or fibers in a vertical direction.

In general, block 1150 may comprise coupling the glass component(s) and the opto-electronic chip(s) to a substrate. Accordingly, the scope of this disclosure should not be limited by characteristics of any particular manner of performing such coupling.

The example method 1100 may, at block 1160, comprise calibrating component placement and/or 3D structure formation. Block 1160 may comprise calibrating component placement and/or 3D structure formation in any of a variety of manners, non-limiting examples of which are provided herein.

Block 1160 may, for example, be performed in conjunction with block 1150. For example, while coupling the glass component and/or opto-electronic chip. Block 1160 may, for example, comprise performing passive alignment, for example aligning components without electrically operating the opto-electronic component. Block 1160 may also, for example, comprise performing active alignment, for example aligning components while the opto-electronic component is being operated.

In an example implementation a light input (e.g., laser signal, optical information signal with test information, etc.) may be provided while performing alignment. While the light input is being provided, block 1160 may comprise measuring a photo current of the opto-electronic chip. In an example scenario in which the opto-electronic chip is a receiver chip, such a chip may generally have one or more photodiodes which may be utilized for such measurement. In an example scenario in which the opto-electronic chip is a transmitter (or modulator) chip, such a chip may also have structures that work as photodiodes which may be utilized for such measurement. For example, block 1160 may comprise adjusting the relative position of the glass component and/or the opto-electronic chip until a maximum current is detected and then attach the glass component and/or the opto-electronic chip at the position.

In another example implementation, the opto-electronic chip may be formed with one or more dedicated inputs (e.g., with coupled photodiode(s)) for alignment. The glass component (or glass chip) may similarly be formed with one or more test structures. In an example implementation, the glass component may be formed with a test structure onto which a light may be shined in a vertical direction (or other direction), while photodiode current is measured in the opto-electronic chip (e.g., with dedicated test photodiodes, with normal operational photodiodes being temporarily tasked for test purposes, etc.).

Block 1160 may thus calibrate the placement of the glass component(s) and/or opto-electronic chip(s). For example, block 1160 may comprise calibrating the placement such that optical inputs and corresponding optical outputs are aligned to within 10% of the mode field diameter (MFD) of the beam. For example, in a scenario in which the MFD is 10 micrometers, the block 1160 may comprise performing the alignment to within 1 micrometer.

Note that in implementations in which the placement process for the glass component and/or opto-electronic chip is capable of meeting the placement tolerance requirements, other forms of calibration may be utilized (e.g., vision system-based alignment based on fiducials, alignment based on mechanical mating features, etc.).

Block 1160 may also, for example, comprise performing calibration during the forming of the glass component. For example, at the time of placement of the glass component and the opto-electronic chip, the glass component might not be completely formed. For example, one or more waveguides might not be formed or might be only partially formed. In such a scenario, after placement of the glass component and the opto-electronic chip, the waveguide(s) may be formed or completed while monitoring photodiode current in the opto-electronic chip to maximize such current.

In general, block 1160 may comprise calibrating component placement and/or 3D structure formation. Accordingly, the scope of this disclosure should not be limited by characteristics of any particular manner of performing such calibrating.

The example method 1100 may, at block 1170, comprise completing assembly of the optical electronic device. Block 1170 may comprise completing the assembly of the optical electronic device in any of a variety of manners, non-limiting examples of which are provided herein.

Block 1170 may, for example, comprise mounting electrical integrated circuit and/or other electronic components to the substrate, completing internal electrical connections, completing optical fiber connections, applying a lid and/or molding (e.g., hermetically sealing the optical electronic device), forming electrical and/or optical connections for connecting the optical electronic device to other components, forming electrical power connections, etc. For example, block 1170 may comprise adhering a metal lid to the substrate to hermetically seal the optical electronic device.

In general, block 1170 may comprise completing assembly of the optical electronic device. Accordingly, the scope of this disclosure should not be limited by characteristics of any particular manner of performing such completing.

The example method 1110 may, at block 1190, comprise performing continued processing. Such continued processing may comprise any of a variety of characteristics. For example, block 1190 may comprise returning execution flow of the example method 1100 to any block thereof. Also for example, block 1190 may comprise directing execution flow of the example method 1100 to any other method operations (or steps or blocks) discussed herein (*e.g.,* with regard to the example method flow diagram 1100, with regard to the example illustrations of Figures 1-10, etc.).

In general, various aspects of this disclosure provide optical components and optical electronic devices, and methods for making optical components and optical electronic devices.

For example, various aspects of this disclosure provide an optical component for use in an optoelectronic assembly. The optical component may, for example, comprise a first three-dimensional (3D) structure and a second three-dimensional (3D) structure. The first three-dimensional (3D) structure may, for example, be configured to, at least, receive a first input beam of light, perform a first optical function, and output a first output beam of light within the material. The second three-dimensional (3D) structure may, for example, be configured to, at least, receive the first output beam of light from the first 3D structure, perform a second optical function, where the second optical function is a different type of optical function than the first optical function, and output a second output beam of light within the material.

The material may, for example, comprise a glass. One of the first and second optical functions may, for example, comprise a light routing function, and another of the first and second optical functions may comprise a light collimating or focusing function. One of the first and second 3D structures may, for example, comprise a waveguide within the unitary piece of the material, such that the waveguide is radially surrounded by a surrounding portion of the unitary piece of the material. One of the first and second 3D structures may, for example, comprise a structural component of a collimating or focusing mirror.

In an example configuration, the unitary piece of the material may comprise a unitary piece of glass that comprises a lateral glass side and a top glass side, where the first 3D structure is configured to receive the first input beam of light at the lateral glass side, and the second 3D structure is configured to route the second output beam of light to the top glass side. The unitary piece of glass may, for example, comprise a third three-dimensional (3D) structure that is configured to, at least, receive a third beam of light from the top glass side, and route the received third beam in a lateral direction.

In another example configuration, the unitary piece of the material may comprise a unitary piece of glass that comprises a lateral glass side and a top glass side, where the unitary piece of glass comprises a third three-dimensional (3D) structure that is dedicated to receiving a beam of light from the top glass side and redirecting the received beam of light.

Also for example, various aspects of this disclosure provide an optical component for use in an optoelectronic assembly. The optical component may, for example, comprise a component (C) that comprises a top C side facing an upward direction and a first lateral C side facing a first lateral direction, where the component (C) is configured to receive first C input light at the first lateral C side and transmit first C output light from the top C side, and an optical element (OE) that comprises a bottom OE side mounted to the top C side, where the optical element (OE) is configured to receive the first C output light from the top C side and perform an OE optical function on the received first C output light.

The component (C) may, for example, comprise a glass. The optical element (OE) may, for example, be configured to transmit OE output light from the bottom OE side. The component (C) may, for example, be configured to receive the OE output light from the bottom OE side through the top C side, and transmit C output light laterally.

The OE optical function may, for example, comprise polarization beam splitting. Also for example, the optical element (OE) may be configured to beam split the first C output light received from the top C side into multiple distinct beams that are orthogonally polarized with respect to each other, and transmit the multiple distinct beams from the bottom OE side. Further for example, the component (C) may be configured to receive the multiple distinct beams from the bottom OE side through the top C side, and transmit the received multiple distinct beams laterally.

The optical element (OE) may, for example, comprise a bottom C1 side that comprises the bottom OE side, and a top C1 side, a polarization beam splitting (PBS) coating on the top C1 side, a second material (C2) comprising a bottom C2 side on the PBS coating, and a top C2 side, and a reflective coating on the top C2 side.

The optical component may, for example, comprise an epoxy, wherein the bottom OE side is attached to the top C side with the epoxy. The OE optical function may, for example, comprise polarization beam combining. Also, the component (C) may for example be configured to receive second C input light at the first lateral C side and transmit second C output light from the top C side, and the optical element (OE) may be configured to beam combine the first C output light received from the top G side and the second C output light received from the top C side into a combined beam, and transmit the combined beam from the bottom OE side. Additionally, the component (C) may be configured to receive the combined beam from the bottom OE side, and transmit the received combined beam laterally.

Also for example, various aspects of this disclosure provide an optical electronic device. The optical electronic device may, for example, comprise a substrate comprising a first substrate side; an opto-electronic chip comprising a first chip side, a second chip side opposite the first chip side, and a third chip that extends between the first and second chip sides, where the second chip side is coupled to the first substrate side; an optical component (OC) comprising a first OC side, a second OC side opposite the first OC side, and a third OC side that extends between the first and second OC sides, where the second OC side is coupled to the first substrate side; and the third OC side is coupled to the third chip side.

The OC side may, for example, be coupled to the third chip side with an epoxy. The optical component may, for example, comprise a component (C) comprising a first C side facing away from the substrate, a second C side opposite the first C side, and a third C side, where the component (C) is configured to receive first C input light at the third C side and transmit first C output light from the first C side; and an optical element (OE) comprising a first OE side, and a second OE side opposite the first OE side and mounted to the first C side, where the optical element (OE) is configured to receive the first C output light from the first C side and perform an OE optical function on the received first C output light. The OE optical function may, for example, comprise a beam splitting function or a beam combining function.

In the following, a set of aspects is disclosed. The aspects are numbered to facilitate referencing the features of one aspect in other aspects. The aspects form part of the disclosure of the present application and could be made subject to independent and/or dependent claims irrespective of what currently is claimed in the application. The aspects are:
1. An optical component for use in an optoelectronic assembly, the optical component comprising:
   a unitary piece of a material comprising:
   a first three-dimensional (3D) structure that is configured to, at least:
      receive a first input beam of light;
      perform a first optical function; and
      output a first output beam of light within the material; and
   a second three-dimensional (3D) structure that is configured to, at least:
      receive the first output beam of light from the first 3D structure;
      perform a second optical function, where the second optical function is a different type of optical function than the first optical function; and
      output a second output beam of light within the material.
2. The optical component of aspect 1, wherein the material comprises a glass.
3. The optical component of aspect 1, wherein one of the first and second optical functions comprises a light routing function, and another of the first and second optical functions comprises a light collimating or focusing function.
4. The optical component of aspect 1, wherein one of the first and second 3D structures comprises a waveguide within the unitary piece of the material, such that the waveguide is radially surrounded by a surrounding portion of the unitary piece of the material.
5. The optical component of aspect 1, wherein one of the first and second 3D structures comprises a structural component of a collimating or focusing mirror.
6. The optical component of aspect 1, wherein:
   the unitary piece of the material comprises a unitary piece of glass that comprises a lateral glass side and a top glass side;
   the first 3D structure is configured to receive the first input beam of light at the lateral glass side; and
   the second 3D structure is configured to route the second output beam of light to the top glass side.
7. The optical component of aspect 6, wherein the unitary piece of glass comprises a third three-dimensional (3D) structure that is configured to, at least:
   receive a third beam of light from the top glass side; and
   route the received third beam in a lateral direction.
8. The optical component of aspect 1, wherein:
   the unitary piece of the material comprises a unitary piece of glass;
   the unitary piece of glass comprises a lateral glass side and a top glass side; and
   the unitary piece of glass comprises a third three-dimensional (3D) structure that is dedicated to receiving a beam of light from the top glass side and redirecting the received beam of light.
9. An optical component for use in an optoelectronic assembly, the optical component comprising:
   a component (C) comprising a top C side facing an upward direction and a first lateral C side facing a first lateral direction, where the component (C) is configured to receive first C input light at the first lateral C side and transmit first C output light from the top C side; and
   an optical element (OE) comprising a bottom OE side mounted to the top C side, where the optical element (OE) is configured to receive the first C output light from the top C side and perform an OE optical function on the received first C output light.
10. The optical component of aspect 9, wherein the component (C) comprises a glass.
11. The optical component of aspect 9, wherein the optical element (OE) is configured to transmit OE output light from the bottom OE side.
12. The optical component of aspect 11, wherein
   the component (C) is configured to receive the OE output light from the bottom OE side through the top C side, and transmit C output light laterally.
13. The optical component of aspect 9, wherein the OE optical function comprises polarization beam splitting.
14. The optical component of aspect 13, wherein the optical element (OE) is configured to beam split the first C output light received from the top C side into multiple distinct beams that are orthogonally polarized with respect to each other, and transmit the multiple distinct beams from the bottom OE side.
15. The optical component of aspect 14, wherein the component (C) is configured to:
   receive the multiple distinct beams from the bottom OE side through the top C side; and
   transmit the received multiple distinct beams laterally.
16. The optical component of aspect 9, wherein the optical element (OE) comprises:
   a first material (C1) comprising a bottom C1 side that comprises the bottom OE side, and a top C1 side;
   a polarization beam splitting (PBS) coating on the top C1 side;
   a second material (C2) comprising a bottom C2 side on the PBS coating, and a top C2 side; and
   a reflective coating on the top C2 side.
17. The optical component of aspect 9, comprising an epoxy, wherein the bottom OE side is attached to the top C side with the epoxy.
18. The optical component of aspect 9, wherein the OE optical function comprises polarization beam combining.
19. The optical component of aspect 18, wherein:
   the component (C) is configured to receive second C input light at the first lateral C side and transmit second C output light from the top C side; and
   the optical element (OE) is configured to beam combine the first C output light received from the top G side and the second C output light received from the top C side into a combined beam, and transmit the combined beam from the bottom OE side.
20. The optical component of aspect 19, wherein the component (C) is configured to:
   receive the combined beam from the bottom OE side; and
   transmit the received combined beam laterally.
21. An optical electronic device comprising:
   a substrate comprising a first substrate side;
   an opto-electronic chip comprising a first chip side, a second chip side opposite the first chip side, and a third chip that extends between the first and second chip sides, where the second chip side is coupled to the first substrate side; and
   an optical component (OC) comprising a first OC side, a second OC side opposite the first OC side, and a third OC side that extends between the first and second OC sides, where:
      the second OC side is coupled to the first substrate side; and
      the third OC side is coupled to the third chip side.
22. The optical electronic device of aspect 21, wherein the third OC side is coupled to the third chip side with an epoxy.
23. The optical electronic device of aspect 21, wherein the optical component (OC) comprises:
   a component (C) comprising a first C side facing away from the subtrate , a second C side opposite the first C side, and a third C side, where the component (C) is configured to receive first C input light at the third C side and transmit first C output light from the first C side; and
   an optical element (OE) comprising a first OE side, and a second OE side opposite the first OE side and mounted to the first C side, where the optical element (OE) is configured to receive the first C output light from the first C side and perform an OE optical function on the received first C output light.
24. The optical electronic device of aspect 23, wherein the OE optical function comprises a beam splitting function or a beam combining function.

The present application claims priority of U.S. Patent Application 18/120,069, filed March 10, 2023. The entire disclosure of this application is hereby explicitly incorporated by reference into the present application.

Implementations disclosed herein may relate to optical components and optical electronic devices, and methods for making optical components and optical electronic devices. As non-limiting examples, various aspects of this disclosure provide various optical component and optical electronic devices, and methods for making thereof, that comprise three-dimensional structured glass configurations.

The discussion herein included numerous illustrative figures that showed various portions of optical components and optical electronic devices and/or methods of manufacturing thereof. For illustrative clarity, such figures did not show all aspects of each example optical component and optical electronic device. Any of the example components, devices, or portions thereof, presented herein may share any or all characteristics with any or all other components, devices, or portions thereof, presented herein.

In summary, various aspects of this disclosure provide optical components and optical electronic devices, and methods for making optical components and optical electronic devices. While the foregoing has been described with reference to certain aspects and examples, it will be understood by those skilled in the art that various changes may be made and equivalents may be substituted without departing from the scope of the disclosure. In addition, many modifications may be made to adapt a particular situation or material to the teachings of the disclosure without departing from its scope. Therefore, it is intended that the disclosure not be limited to the particular example(s) disclosed, but that the disclosure will include all examples falling within the scope of the appended claims.

## Claims

1. An optical component for use in an optoelectronic assembly, the optical component comprising:
a component (C) comprising a top C side facing an upward direction and a first lateral C side facing a first lateral direction, where the component (C) is configured to receive first C input light at the first lateral C side and transmit first C output light from the top C side; and
an optical element (OE) comprising a bottom OE side mounted to the top C side, where the optical element (OE) is configured to receive the first C output light from the top C side and perform an OE optical function on the received first C output light.

2. The optical component of claim 1, wherein the optical element (OE) is configured to transmit OE output light from the bottom OE side, wherein, optionally,
the component (C) is configured to receive the OE output light from the bottom OE side through the top C side, and transmit C output light laterally.

3. The optical component of claim 1 or 2, wherein the OE optical function comprises polarization beam splitting.

4. The optical component of any one of claims 1 to 3, wherein the optical element (OE) is configured to beam split the first C output light received from the top C side into multiple distinct beams that are orthogonally polarized with respect to each other, and transmit the multiple distinct beams from the bottom OE side, wherein, optionally, the component (C) is configured to:
receive the multiple distinct beams from the bottom OE side through the top C side; and
transmit the received multiple distinct beams laterally.

5. The optical component of any one of claims 1 to 4, wherein the optical element (OE) comprises:
a first material (C1) comprising a bottom C1 side that comprises the bottom OE side, and a top C1 side;
a polarization beam splitting (PBS) coating on the top C1 side;
a second material (C2) comprising a bottom C2 side on the PBS coating, and a top C2 side; and
a reflective coating on the top C2 side.

6. The optical component of any one of claims 1 to 5, wherein the OE optical function comprises polarization beam combining.

7. The optical component of any one of claims 1 to 6, wherein:
the component (C) is configured to receive second C input light at the first lateral C side and transmit second C output light from the top C side; and
the optical element (OE) is configured to beam combine the first C output light received from the top G side and the second C output light received from the top C side into a combined beam, and transmit the combined beam from the bottom OE side.

8. The optical component of claim 7, wherein the component (C) is configured to:
receive the combined beam from the bottom OE side; and
transmit the received combined beam laterally.

9. The optical component of any one of claims 1 to 8,
a) comprising an epoxy, wherein the bottom OE side is attached to the top C side with the epoxy, and/or wherein
b) the component (C) comprises a glass.

10. An optical electronic device comprising:
a substrate comprising a first substrate side;
an opto-electronic chip comprising a first chip side, a second chip side opposite the first chip side, and a third chip side that extends between the first and second chip sides, where the second chip side is coupled to the first substrate side; and
an optical component (OC) comprising a first OC side, a second OC side opposite the first OC side, and a third OC side that extends between the first and second OC sides, where:
the second OC side is coupled to the first substrate side; and
the third OC side is coupled to the third chip side.

11. The optical electronic device of claim 10, wherein the third OC side is coupled to the third chip side with an epoxy.

12. The optical electronic device of claim 10 or 11, wherein the optical component (OC) comprises:
a component (C) comprising a first C side facing away from the substrate, a second C side opposite the first C side, and a third C side, where the component (C) is configured to receive first C input light at the third C side and transmit first C output light from the first C side; and
an optical element (OE) comprising a first OE side, and a second OE side opposite the first OE side and mounted to the first C side, where the optical element (OE) is configured to receive the first C output light from the first C side and perform an OE optical function on the received first C output light.

13. The optical electronic device of any one of claims 10 to 12, wherein the OE optical function comprises a beam splitting function or a beam combining function.

14. An optical component for use in an optoelectronic assembly, the optical component comprising:
a unitary piece of a material comprising:
a first three-dimensional (3D) structure that is configured to, at least:
receive a first input beam of light;
perform a first optical function; and
output a first output beam of light within the material; and
a second three-dimensional (3D) structure that is configured to, at least:
receive the first output beam of light from the first 3D structure;
perform a second optical function, where the second optical function is a different type of optical function than the first optical function; and
output a second output beam of light within the material.

15. The optical component of claim 14,
a) wherein the material comprises a glass, and/or
b) wherein one of the first and second optical functions comprises a light routing function, and another of the first and second optical functions comprises a light collimating or focusing function, and/or
c) wherein one of the first and second 3D structures comprises a waveguide within the unitary piece of the material, such that the waveguide is radially surrounded by a surrounding portion of the unitary piece of the material, and/or
d) wherein one of the first and second 3D structures comprises a structural component of a collimating or focusing mirror, and/or
e) wherein:
the unitary piece of the material comprises a unitary piece of glass that comprises a lateral glass side and a top glass side;
the first 3D structure is configured to receive the first input beam of light at the lateral glass side; and
the second 3D structure is configured to route the second output beam of light to the top glass side, optionally
e1) wherein the unitary piece of glass comprises a third three-dimensional (3D) structure that is configured to, at least:
receive a third beam of light from the top glass side; and
route the received third beam in a lateral direction, and/or
f) wherein:
the unitary piece of the material comprises a unitary piece of glass;
the unitary piece of glass comprises a lateral glass side and a top glass side; and
the unitary piece of glass comprises a third three-dimensional (3D) structure that is dedicated to receiving a beam of light from the top glass side and redirecting the received beam of light.
